# EUROPEAN PATENT SPECIFICATION

(11) **EP 3 747 836 B1**
(45) Date of publication and mention of the grant of the patent: **15.03.2023**
(21) Application number: 19764377.8
(22) Date of filing: 29.01.2019
(51) Int. Cl.: C02F 3/30, C02F 9/14, C02F 1/52, C02F 1/56, C02F 3/12

(54) **ANAEROBIC AMMONIA OXIDATION-BASED SEWAGE TREATMENT PROCESS USING MBR**
ANAEROBES AMMONIAKOXIDATIONSBASIERTES ABWASSERBEHANDLUNGSVERFAHREN UNTER VERWENDUNG VON MBR
PROCÉDÉ DE TRAITEMENT D'EAUX USÉES BASÉ SUR L'OXYDATION D'AMMONIAC ANAÉROBIE UTILISANT UN BRM

(30) Priority: 09.03.2018 CN 201810194644
(43) Date of publication of application: 09.12.2020
(73) Proprietor: SHANGHAI SUPRATEC MEMBRANE TECHNOLOGY CO., LTD., Shanghai 201599 (CN)
(72) Inventor: ZHANG, Xianchao, Shanghai 200127 (CN)
(74) Representative: Bandpay & Greuter
(86) International application number: PCT/CN2019/073551
(87) International publication number: WO 2019/169980

(56) References cited:
- CN-A- 103 539 319
- CN-A- 106 430 576
- CN-A- 107 739 094
- CN-U- 203 545 786
- CN-U- 208 327 522
- CN-Y- 2 900 509
- US-A1- 2011 207 061
- US-A1- 2016 023 935

## Description

### TECHNICAL FIELD

The present invention relates to the technical field of sewage treatment, and in particular, to an anaerobic ammonia oxidation-based sewage treatment process using a membrane bioreactor (MBR).

### BACKGROUND

Nitrogen and phosphorus removal systems typically involve multi-stage (anaerobic, anoxic, aerobic) combined activated sludge processes, such as anaerobic/anoxic/oxic (A2O) and anaerobic/oxic (AO). Different types of bacteria that nitrify/denitrify and accumulate phosphorus coexist in the sludge. As a result, in addition to the bacteria competing for sources of carbon in the sludge, the sludge age increases, which causes the bacteria to be less efficient, aeration energy consumption to increase, process procedures to take longer, and additional volume and space be added for the pool to function.

Anaerobic ammonium oxidation (anammox) bacteria offer a new denitrification technique. These bacteria can directly convert ammonia nitrogen and nitrite nitrogen into nitrogen under anaerobic conditions with nitrite as an electron acceptor. Compared with prior nitrification and denitrification techniques of activated sludge, the anammox process only needs to oxidize ammonia nitrogen into nitrite nitrogen in the aerobic stage. This eliminates the subsequent step of oxidizing nitrite nitrogen to nitrate nitrogen, thus saving about 60% of aeration. Additionally, since it is an autotrophic bacteria, anammox bacteria is subject to biochemical reaction without adding carbon sources, which is highly desirable with respect to the manner in which traditional denitrification processes are carried out. Greenhouse gas emissions can be substantially reduced as a result.

Delft University of Technology in the Netherlands was the first to develop the process for denitrification of industrial and municipal sewage by anaerobic ammonium oxidation. This process is based on the granular autotrophic bacteria (anammox bacteria), and has been applied in side stream and mainstream treatment components of industrial sewage accompanied with increases in water temperature. Denitrification by anaerobic ammonium oxidation has not been implemented, however, in the treatment of municipal sewage. Anammox bacteria is a slow-growing autotrophic bacteria in activated sludge, and its accumulation is a critical component for commercial application of the anammox process. It is reported that high concentrations of biodegradable organic matter promote propagation of anaerobic bacteria. Such biodegradable matter therefore affects the cultivation of anammox bacteria particles. Thus, influent sewage of the anammox process should have lower chemical oxygen demand (COD) or 5-day biochemical oxygen demand (BOD₅) and suspended solid concentration.

At present, the sewage treatment process has the following problems:
(1) At present, anammox sewage treatment technology is only applied to part of the industrial sewage field. There are some technical problems in the treatment of municipal sewage, such as difficulty operating the process in a stable manner, and the technology cannot be used in conjunction with complex pollutants or under conditions of low water temperature and low concentration.
(2) The influent sewage of the anammox process requires pretreatment. The traditional treatment method cannot meet the requirements of low COD or low BOD₅ and low suspended solid concentration.
(3) In the process of anammox water treatment, a large amount of nitrate is needed in the internal circulation, so the return flow of sludge is large and sewage treatment efficiency is much less than optimal.

US2016/023935, CN107739094 and CN103539319 disclose anaerobic ammonia oxidation-based sewage treatment processes of the prior art.

### SUMMARY

The objective of the present invention is to provide an anaerobic ammonia oxidation-based sewage treatment process using a membrane bioreactor (MBR), so as to solve the above technical problems.

The technical problems solved by the present invention can be realized by adopting the following technical solutions:
An anaerobic ammonia oxidation-based sewage treatment process according to the present invention uses a membrane bioreactor (MBR) as defined in the independent claim 1. Optional features are defined in the dependent claims 2-9. The process comprises the following steps:
(1) sewage pretreatment: after removing large particles of sewage by a coarse grid and sand removal device, sending the sewage to a coagulation reactor for flocculation, and separating solid particles by a pretreatment fine grid unit, so that sizes of the solid particles in pretreated sewage are no larger than that of anammox bacteria particles in denitrification treatment step;
(2) denitrification treatment: sending the pretreated sewage to a nitrification tank for nitrification, wherein the nitrification tank is equipped with an aerator to make the ammonia nitrogen incompletely oxidized into nitrite and produce activated sludge liquid containing residual ammonia nitrogen, wherein an aeration rate from the aerator to the nitrification tank is less than a critical value of ammonia nitrogen oxidation to nitrate; and putting the activated sludge liquid containing nitrite and residual ammonia nitrogen into an anammox reactor which is an anaerobic environment without oxygen for denitrification reaction;
(3) solid-liquid separation treatment: putting sewage after the denitrification treatment into an MBR for solid-liquid separation, wherein the MBR is equipped with an aerator to oxidize nitrite into nitrate; and the activated sludge rich in anammox bacteria particles and nitrate separated from the MBR is returned to the anammox reactor as a reactant for a next denitrification treatment.

In the process of the sewage pretreatment, adding a fine grid filtration step can effectively reduce the sizes of solid particles in sewage, so that the sewage has low COD or low BOD₅ and low suspended solid concentration in the denitrification treatment, so as to produce large amounts of anaerobic autotrophic bacteria . The membrane of the MBR is used to further treat the sewage treated by the anammox reactor, which has a relatively high concentration of mixed liquid suspended solid, and matches the anammox sewage treatment process.

According to the invention, the solid-liquid separation treatment step further includes setting a reflux fine grid unit on a path of the excess activated sludge rich in the anammox bacteria particles and the nitrate returning to the anammox reactor. The reflux fine grid unit is used to control a concentration of the anammox bacteria in the anammox reactor.

A concentration of the activated sludge returning to the anammox reactor can be limited by changing a pore size or mesh size of the reflux fine grid, so as to control the number of the anammox bacteria in the denitrification treatment.

Preferably, an agitator is arranged in the coagulation reactor, and inorganic salts and high molecular polymers with a flocculation effect are put into the coagulation reactor.

Preferably, the pretreatment fine grid unit of sewage pretreatment step adopts a rotary drum type grid or a plane grid. A pore size or mesh size of the pretreatment fine grid is 0.1 mm-2.0 mm.

Preferably, the reflux fine grid unit adopts one or more of a rotary drum type grid, a plane grid, a step type grid or an internal flow type grid. The pore size or mesh size of the reflux fine grid is 0.1 mm-2.0 mm.

Preferably, the denitrification reaction in the anammox reactor converts the nitrite and the residual ammonia nitrogen transported from the nitrification tank into nitrogen. And the process of denitrification of returned sludge containing nitrate is carried out in the anammox reactor.

Preferably, a reaction temperature in the anammox reactor is ≥ 10°C. Preferably, the reaction temperature in the anammox reactor is 10°C -35°C.

Preferably, a ratio of the activated sludge in an MBR membrane tank returning to the anammox reactor is controlled by a concentration of the mixed liquid suspended solid in the anammox reactor.

Due to existence of a biochemical balance in the anammox reactor, a stable concentration of the mixed liquid suspended solid is needed. However, the concentration of the mixed liquid suspended solid will decrease as reaction goes on and needs to be replenished by the activated sludge in the MBR membrane tank.

Preferably, steps of the sewage pretreatment, the denitrification treatment and the solid-liquid separation treatment are carried out synchronously and continuously, and water is continuously discharged from the water outlet of the MBR.

Advantages: due to adopting the above technical scheme, the present invention achieves the following advantages.
(1) In the pretreatment and sludge return processes, the fine grid is used in combination with the MBR process, which measurably improves the ability for stable operation and efficiency of the treatment process.
(2) The combination of the anammox and MBR processes also greatly reduces land use area. At the same time, high concentration of the anammox bacteria particles in the MBR process ensures an efficient operation of municipal and industrial sewage treatment plants.
(3) The anammox sewage treatment technology can be carried out at low temperature.
(4) Unlike traditional activated sludge processes for nitrogen removal, the present invention can significantly reduce the required internal circulation of nitrate. At the same time, the sludge return flow required in the anammox process is also significantly reduced.

### BRIEF DESCRIPTION OF THE DRAWINGS

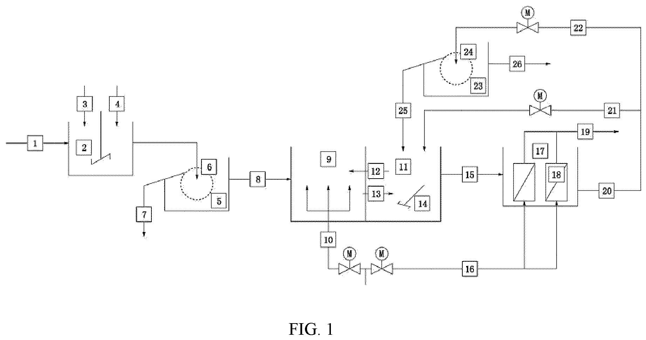

FIG. 1 is a flow chart of an anaerobic ammonia oxidation-based sewage treatment process of the present invention.

In the drawing: 1. coarse grid and sand removal device; 2. coagulation reactor with agitator; 3. inorganic salt flocculant; 4. high molecular polymer flocculant; 5. pretreatment fine grid unit; 6. pretreatment fine grid; 7. grid slag; 8. fine screened sewage; 9. nitrification tank; 10. aerator; 11. anammox reactor; 12. reflux mixed liquid suspended solid; 13. activated sludge liquid; 14. agitator; 15. mixed liquid suspended solid; 16. membrane scrubbing gas; 17. MBR membrane tank; 18. MBR membrane group; 19. filtered liquid; 20. activated sludge; 21. process operation condition control module; 22. excess sludge; 23. reflux fine grid unit; 24. reflux fine grid; 25. sludge reflux; 26. sludge grid slag.

### DETAILED DESCRIPTION OF THE EMBODIMENTS

In order to make it easy to understand the technical means, creative features, achievement purpose and efficacy of the present invention, the present invention is further described in combination with specific illustrations.

Referring to FIG. 1, the present invention provides an anaerobic ammonia oxidation-based sewage treatment process using a membrane bioreactor (MBR), which is carried out according to the following steps.

Step a: pretreated sewage treated by the coarse grid and sanding removal device 1 is input into the coagulation reactor 2 with agitator. The inorganic salt flocculant 3 and the high molecular polymer flocculant 4 are added into the coagulation reactor 2 as chemical flocculants. The agitator is started for mechanical stirring, and the undissolved inorganic and organic solid materials are destabilized and flocculated.

Step b: flocculated sewage is treated with the pretreatment fine grid unit 5 to remove solids, and the pretreatment fine grid 6 in the pretreatment fine grid unit 5 adopts a rotary drum type grid or a plane grid, and the pore size or mesh size of the fine grid is 0.1 mm-2.0 mm. The intercepted grid slag 7 is transported to the sludge treatment system for treatment. The pretreatment fine grid can also choose a step type grid and an internal flow type grid.

Step c: concentrations of undissolved solids and organic matters in the fine screened sewage 8 after pretreatment are low. The fine screened sewage 8 is input into the nitrification tank 9, and the nitrification tank 9 is connected with the aerator 10. In order to meet the needs of autotrophic bacteria biochemical reaction, it is necessary to partially oxidize ammonia nitrogen to nitrite and avoid complete nitrification of ammonia nitrogen. Therefore, an aeration rate from the aerator 10 to the nitrification tank 9 should be less than a critical value of ammonia nitrogen oxidation to nitrate.

At the same time, an activated sludge concentration in the nitrification tank 9 is regulated by the concentration of the reflux mixed liquid suspended solid 12 from the anammox reactor 11.

Step d: the activated sludge liquid 13 containing nitrite and residual ammonia nitrogen is input into the anammox reactor 11 from the nitrification tank 9. The anammox reactor 11 is an anaerobic environment without oxygen. The mechanical stirring is performed by the agitator 14. Anammox bacteria, an anaerobic autotrophic bacterium, take nitrite as an electron acceptor to conduct a biochemical denitrification reaction at a reaction temperature of 10°C -35°C, and the ammonia nitrogen and nitrite nitrogen in the activated sludge liquid 13 are directly converted into nitrogen for release out to realize nitrogen removal. The anammox bacteria in this step can subject to reaction at a temperature as low as 10°C, so that the present invention can be applied to denitrification treatment in a low water temperature environment in winter.

Step e: the sewage enters into the MBR membrane tank 17 along with the mixed liquid suspended solid 15. The MBR membrane tank 17 combines a membrane separation technology and a biochemical treatment technology, filters the sludge-containing sewage in the tank through the membrane group 18, realizes sludge-water separation, rejects the sludge microorganism, and increases the activated sludge concentration in the tank significantly, thus ensuring a good effluent quality through the membrane filtration function.

The membrane group 18 is scrubbed by the membrane scrubbing gas 16 generated by the aerator in the MBR membrane tank 17, and excess nitrite in the mixed liquid suspended solid 15 is oxidized to nitrate.

Step f: the activated sludge 20 discharged from the MBR membrane tank 17 is returned to the anammox reactor 11, and a reflux ratio is controlled by the concentration of the mixed liquid suspended solid and a denitrification reaction ratio in the MBR membrane tank 17.

The activated sludge 20 contains granular anaerobic autotrophic bacteria, which are injected back into the anammox reactor 11 through the process operation condition control module 21. According to material balance theory of a biochemical system, in order to maintain the concentration of the mixed liquid suspended solid in the system, the excess sludge 22 needs to be discharged. The excess sludge 22 is firstly treated by the reflux fine grid unit 23, and then partially returned to the anammox reactor 11. The type and structure size of the reflux fine grid 24 in the reflux fine grid unit 23 are consistent with those of the pretreatment fine grid 6, and the pore size or mesh size is equal to or smaller than that of the pretreatment fine grid 6.

The anaerobic autotrophic bacteria particles screened out by the sludge fine grid unit 23 are returned to the anammox reactor 11 through the sludge reflux 25, and the sludge grid slag 26 is discharged into sludge treatment system.

Step g: treated water in the MBR membrane tank 17 is the filtered liquid 19, which is pumped from the membrane group 18 by a suction pump to a clean water tank for standby.

The above shows and describes the basic principle, main features and advantages of the present invention. Technical personnel in the industry should understand that the present invention is not limited by the above-mentioned embodiments. The scope of protection claimed by the present invention is defined by the attached claims.

## Claims

1. An anaerobic ammonia oxidation-based sewage treatment process using membrane bioreactor (MBR), comprising the following steps:
(1) sewage pretreatment: after removing large particles of sewage by a coarse grid and sand removal device (1), sending the sewage to a coagulation reactor (2) for flocculation, and separating solid particles by a pretreatment fine grid unit (5), so that sizes of the solid particles in pretreated sewage is not larger than that of anammox bacteria particles in denitrification treatment step;
(2) denitrification treatment: sending the pretreated sewage to a nitrification tank (9) for nitrification, wherein the nitrification tank is equipped with an aerator (10) to make the ammonia nitrogen incompletely oxidized into nitrite and produce an activated sludge liquid containing residual ammonia nitrogen; wherein an aeration rate from the aerator to the nitrification tank is less than a critical value of ammonia nitrogen oxidation to nitrate; and putting the activated sludge liquid containing nitrite and residual ammonia nitrogen into an anammox reactor (11) which is an anaerobic environment without oxygen for denitrification reaction;
(3) solid-liquid separation treatment: putting sewage after the denitrification treatment into an MBR (17) for solid-liquid separation, wherein the MBR is equipped with an aerator to oxidize nitrite into nitrate; and the activated sludge (20) rich in anammox bacteria particles and nitrate separated from the MBR is returned to the anammox reactor as a reactant for a next denitrification treatment, wherein excess sludge (22) is treated by a reflux fine grid unit (23), wherein the anaerobic autotrophic bacteria particles screened out by the reflux fine grid unit (23) are returned to the anammox reactor (11) through the sludge reflux (25), and the sludge grid slag (26) is discharged into sludge treatment system, and the reflux fine grid unit is used to control a concentration of anammox bacteria in the anammox reactor.

2. The anaerobic ammonia oxidation-based sewage treatment process using MBR according to claim 1, wherein an agitator is arranged in the coagulation reactor, and inorganic salts and high molecular polymers with a flocculation effect are put into the coagulation reactor.

3. The anaerobic ammonia oxidation-based sewage treatment process using MBR according to claim 1, wherein the pretreatment fine grid unit of sewage pretreatment step adopts a rotary drum type grid or a plane grid; a pore size or mesh size of a pretreatment fine grid is 0.1 mm-2.0 mm.

4. The anaerobic ammonia oxidation-based sewage treatment process using MBR according to claim 1, wherein the reflux fine grid unit adopts at least one selected from the group consisting of a rotary drum type grid, a plane grid, a step type grid or an internal flow type grid; the pore size or mesh size of the reflux fine grid is 0.1 mm-2.0 mm.

5. The anaerobic ammonia oxidation-based sewage treatment process using MBR according to claim 1, wherein the denitrification reaction in the anammox reactor converts the nitrite and the residual ammonia nitrogen transported from the nitrification tank into nitrogen; and a process of denitrification of returned sludge containing nitrate is carried out in the anammox reactor.

6. The anaerobic ammonia oxidation-based sewage treatment process using MBR according to any one of claims 1-5, wherein a reaction temperature in the anammox reactor is greater than or equal to 10°C.

7. The anaerobic ammonia oxidation-based sewage treatment process using MBR according to claim 6, wherein the reaction temperature in the anammox reactor is 10°C -35°C.

8. The anaerobic ammonia oxidation-based sewage treatment process using MBR according to claim 1, wherein a ratio of the activated sludge in an MBR membrane tank returning to the anammox reactor is controlled by a concentration of the mixed liquid suspended solid in the anammox reactor.

9. The anaerobic ammonia oxidation-based sewage treatment process using MBR according to claim 1, wherein steps of the sewage pretreatment, the denitrification treatment and the solid-liquid separation treatment are carried out synchronously and continuously, and water is continuously discharged from a water outlet of the MBR.

## Patentansprüche

1. Anaerobes ammoniakoxidationsbasiertes Abwasserbehandlungsverfahren unter Verwendung eines Membranbioreaktors (MBR), umfassend die folgenden Schritte:
(1) Abwasservorbehandlung: nach dem Entfernen von großen Abwasserpartikeln durch ein grobes Gitter und eine Sandentfernungsvorrichtung (1) Senden des Abwassers an einen Koagulationsreaktor (2) zur Flockung und Trennen der festen Partikel durch eine Vorbehandlungseinheit mit feinem Gitter (5), so dass die Abmessungen der festen Partikel im vorbehandelten Abwasser nicht größer als diejenigen der Anammox-Bakterien im Denitrifikations-Behandlungsschritt sind;
(2) Denitrifikations-Behandlung: Senden des vorbehandelten Abwassers in einen Nitrifikationstank (9) zur Nitrifikation, wobei der Nitrifikationstank mit einem Lüfter (10) ausgestattet ist, um den unvollständig oxidierten Ammoniakstickstoff zu Nitrit umzuwandeln und eine aktivierte Schlammflüssigkeit herzustellen, die restlichen Ammoniakstickstoff enthält, wobei eine Belüftungsrate vom Lüfter zum Nitrifikationstank weniger als ein kritischer Wert der Ammoniakstickstoff-Oxidation zu Nitrat ist, und Geben der aktivierten Schlammflüssigkeit, die Nitrit und restlichen Ammoniakstickstoff enthält, in den Anammox-Reaktor (11), wobei es sich um eine anaerobe Umgebung ohne Sauerstoff für die Denitrifikationsreaktion handelt;
(3) Fest-flüssig-Trennungsbehandlung: Geben des Abwassers nach der Denitrifikations-Behandlung in einen MBR (17) zur Fest-flüssig-Trennung, wobei der MBR mit einem Lüfter ausgestattet ist, um Nitrit zu Nitrat zu oxidieren; und der aktivierte Schlamm (20), reich an Anammox-Bakterienpartikel, und Nitrat, getrennt vom MBR, an den Anammox-Reaktor als ein Reaktant für eine folgende Denitrifikations-Behandlung rückgeführt wird, wobei überschüssiger Schlamm (22) durch eine Rückflusseinheit mit feinem Gitter (23) behandelt wird, wobei die anaeroben autotrophen Bakterienpartikel, gesiebt durch die Rückflusseinheit mit feinem Gitter (23) in den Anammox-Reaktor (11) durch die Schlammrückführung (25) rückgeführt werden, und die Schlammschlacke des Gitters (26) in das Schlammbehandlungssystem abgeladen wird, und die Rückflusseinheit mit feinem Gitter verwendet wird, um eine Konzentration von Anammox-Bakterien im Anammox-Reaktor zu steuern.

2. Anaerobes ammoniakoxidationsbasiertes Abwasserbehandlungsverfahren unter Verwendung von MBR nach Anspruch 1, wobei ein Rührwerk im Gerinnungsreaktor angeordnet ist und anorganische Salze und hochmolekulare Polymere mit Flockungseffekt in den Gerinnungsreaktor gegeben werden.

3. Anaerobes ammoniakoxidationsbasiertes Abwasserbehandlungsverfahren unter Verwendung von MBR nach Anspruch 1, wobei die Vorbehandlungseinheit mit feinem Gitter des Abwasservorbehandlungsschritts die Form eines Gitters vom Typ drehbare Trommel oder planare Trommel annimmt; eine Porengröße oder Maschengröße eines feinen Vorbehandlungsgitters 0,1 mm - 2,0 mm beträgt.

4. Anaerobes ammoniakoxidationsbasiertes Abwasserbehandlungsverfahren unter Verwendung von MBR nach Anspruch 1, wobei die Rückflusseinheit mit feinem Gitter mindestens eines, ausgewählt aus der Gruppe, bestehend aus einem Gitter vom Typ drehbare Trommel, einem planaren Gitter, einem schrittartigen Gitter, oder einem Gitter vom Typ interner Fluss ist; die Poren- oder Maschengröße des feinen Rückflussgitters 0,1 mm - 2,0 mm beträgt.

5. Anaerobes ammoniakoxidationsbasiertes Abwasserbehandlungsverfahren unter Verwendung von MBR nach Anspruch 1, wobei die Denitrifikationsreaktion im Anammox-Reaktor das Nitrit und den restlichen Ammoniakstickstoff, transportiert vom Nitrifikationstank, in Stickstoff umwandelt; und ein Prozess der Denitrifikation von rückgeführtem Schlamm, der Nitrat enthält, im Anammox-Reaktor durchgeführt wird.

6. Anaerobes ammoniakoxidationsbasiertes Abwasserbehandlungsverfahren unter Verwendung von MBR nach Anspruch 1 - 5, wobei eine Reaktionstemperatur im Anammox-Reaktor größer als oder gleich wie 10 °C ist.

7. Anaerobes ammoniakoxidationsbasiertes Abwasserbehandlungsverfahren unter Verwendung von MBR nach Anspruch 6, wobei die Reaktionstemperatur im Anammox-Reaktor 10°C - 35 °C ist.

8. Anaerobes ammoniakoxidationsbasiertes Abwasserbehandlungsverfahren unter Verwendung von MBR nach Anspruch 1, wobei eine Rate des aktivierten Schlamms in einem MBR-Membrantank, der in den Anammox-Reaktor zurückkehrt, durch eine Konzentration des Trockensubstanzgehalts im Belebungsbecken im Anammox-Reaktor gesteuert wird.

9. Anaerobes ammoniakoxidationsbasiertes Abwasserbehandlungsverfahren unter Verwendung von MBR nach Anspruch 1, wobei Schritte der Abwasservorbehandlung, der Denitrifikationsbehandlung und der Fest-flüssig-Trennungsbehandlung synchron und kontinuierlich durchgeführt werden und Wasser kontinuierlich aus einem Wasserauslass des MBR entladen wird.

## Revendications

1. Procédé de traitement d'eaux usées à base d'oxydation anaérobie de l'ammoniac utilisant un bioréacteur à membrane (MBR), comprenant les étapes suivantes :
(1) prétraitement des eaux usées : après retrait des grandes particules des eaux usées par une grille grossière et un dispositif de retrait de sable (1), transfert des eaux usées vers un réacteur de coagulation (2) pour floculation, et séparation des particules solides par une unité de grille fine de prétraitement (5), de sorte que les tailles des particules solides dans les eaux usées prétraitées n'est pas plus grande que celles des particules de bactéries anammox dans l'étape de traitement de dénitrification ;
(2) traitement de dénitrification : transfert des eaux usées prétraitées vers une cuve de nitrification (9) pour nitrification, dans lequel la cuve de nitrification est équipée d'un aérateur (10) pour convertir l'azote ammoniacal incomplètement oxydé en nitrite et produire un liquide de boues activées contenant de l'azote ammoniacal résiduel ; dans lequel un taux d'aération de l'aérateur vers la cuve de nitrification est inférieur à une valeur critique d'oxydation d'azote ammoniacal en nitrate ; et placement du liquide de boues activées contenant du nitrite et de l'azote ammoniacal résiduel dans un réacteur anammox (11) qui est un environnement anaérobie sans oxygène pour une réaction de dénitrification ;
(3) traitement de séparation solide-liquide : placement des eaux usées après le traitement de dénitrification dans un MBR (17) pour séparation solide-liquide, dans lequel le MBR est équipé d'un aérateur pour oxyder le nitrite en nitrate ; et les boues activées (20) riches en particules de bactéries anammox et en nitrate séparées provenant du MBR sont renvoyées au réacteur anammox en tant que réactif pour un traitement de dénitrification suivant, dans lequel les boues en excès (22) sont traitées par une unité de grille fine à reflux (23), dans lequel les particules de bactéries anaérobies autotrophes séparées par l'unité de grille fine à reflux (23) sont renvoyées au réacteur anammox (11) par l'intermédiaire du reflux de boues (25), et les scories de grille de boues (26) sont évacuées dans le système de traitement de boues, et l'unité de grille fine à reflux est utilisée pour réguler une concentration de bactéries anammox dans le réacteur anammox.

2. Procédé de traitement d'eaux usées à base d'oxydation anaérobie de l'ammoniac utilisant un MBR selon la revendication 1, dans lequel un agitateur est agencé dans le réacteur de coagulation, et des sels inorganiques et des polymères à poids moléculaire élevé ayant un effet de floculation sont placés dans le réacteur de coagulation.

3. Procédé de traitement d'eaux usées à base d'oxydation anaérobie de l'ammoniac utilisant un MBR selon la revendication 1, dans lequel l'unité de grille fine de prétraitement de l'étape de prétraitement des eaux usées adopte une grille de type cylindre rotatif ou une grille plane ; une taille de pore ou une taille de maille d'une grille fine de prétraitement est de 0,1 mm à 2,0 mm.

4. Procédé de traitement d'eaux usées à base d'oxydation anaérobie de l'ammoniac utilisant un MBR selon la revendication 1, dans lequel l'unité de grille fine à reflux adopte au moins l'une choisie dans le groupe constitué d'une grille de type cylindre rotatif, une grille plane, une grille de type à gradin ou une grille de type à écoulement interne ; la taille de pore ou la taille de maille de la grille fine à reflux étant de 0,1 mm à 2,0 mm.

5. Procédé de traitement d'eaux usées à base d'oxydation anaérobie de l'ammoniac utilisant un MBR selon la revendication 1, dans lequel la réaction de dénitrification dans le réacteur anammox convertit le nitrite et l'azote ammoniacal résiduel transportés depuis la cuve de nitrification en azote ; et un procédé de dénitrification des boues retournées contenant du nitrate est conduit dans le réacteur anammox.

6. Procédé de traitement d'eaux usées à base d'oxydation anaérobie de l'ammoniac utilisant un MBR selon l'une quelconque des revendications 1 à 5, dans lequel une température de réaction dans le réacteur anammox est supérieure ou égale à 10 °C.

7. Procédé de traitement d'eaux usées à base d'oxydation anaérobie de l'ammoniac utilisant un MBR selon la revendication 6, dans lequel la température de réaction dans le réacteur anammox est de 10 °C à 35 °C.

8. Procédé de traitement d'eaux usées à base d'oxydation anaérobie de l'ammoniac utilisant un MBR selon la revendication 1, dans lequel un rapport des boues activées dans une cuve à membrane du MBR renvoyées vers le réacteur anammox est régulé par une concentration des solides en suspension dans un liquide mixte dans le réacteur anammox.

9. Procédé de traitement d'eaux usées à base d'oxydation anaérobie de l'ammoniac utilisant un MBR selon la revendication 1, dans lequel les étapes de prétraitement des eaux usées, traitement de dénitrification et traitement de séparation solide-liquide sont effectuées de façon synchrone et continue, et l'eau est évacuée en continu depuis une sortie d'eau du MBR.
